# EUROPEAN PATENT SPECIFICATION

(11) **EP 1 302 041 B1**
(45) Date of publication and mention of the grant of the patent: **24.12.2008**
(21) Application number: 01941403.6
(22) Date of filing: 18.06.2001
(51) Int. Cl.: H04L 27/26, H04B 7/26

(54) **DEVICE FOR NARROW-BAND COMMUNICATION IN A MULTI-CARRIER SYSTEM**
EINRICHTUNG ZUR SCHMALBANDKOMMUNIKATION IN EINEM MEHRTRÄGERSYSTEM
DISPOSITIF DE COMMUNICATION A BANDE ETROITE D'UN SYSTEME A ONDES PORTEUSES MULTIPLES

(30) Priority: 20.06.2000 SE 0002332
(43) Date of publication of application: 16.04.2003
(73) Proprietor: Telefonaktiebolaget L M Ericsson (publ), 164 83 Stockholm (SE)
(72) Inventor: SJÖBERG, Sten, S-438 33 Landvetter (SE); HANSSON, Ulf, S-443 39 Lerum (SE)
(74) Representative: Andersson, Per Rune
(86) International application number: PCT/SE2001/001373
(87) International publication number: WO 2001/099366

(56) References cited:
- EP-A2- 1 005 190
- DATABASE WPI Week 200031, Derwent Publications Ltd., London, GB; AN 2000-357158, XP002946386 & JP 2000 115834 A (SONY CORP) 21 April 2000
- DATABASE WPI Week 200041, Derwent Publications Ltd., London, GB; AN 2000-470675, XP002946387 & JP 2000 174725 A (MATSUSHITA DENKI SANGYO KK) 23 June 2000
- INCHEOL JEONG ET AL.: 'A time division duplex CDMA systems using asymmetric modulation scheme in duplex channel' IEICE TRANS. COMMUN. vol. E82-B, no. 12, December 1999, pages 1956 - 1963, XP002946388

## Description

### TECHNICAL FIELD

This invention relates to a device which permits a narrow-band device, for example a hand-held computer, to communicate with a central unit in a multi-carrier system in an energy-efficient way.

### CURRENT TECHNOLOGY

A technique which is often used in modem digital telecommunication systems is so-called multi-carrier systems, in other words systems where a number of carrier waves at different frequencies are used to transit information within one and the same time slot. A typical multi-carrier system comprises a central unit that handles the communication with and between a number of subscribers within a particular area. Such systems can also be used in, for example, office environments, in so-called LAN-systems (Local Area Network).

In EP-A-1005190, a multi-carrier COMA system and OFDM system is disclosed.

The multi-carrier technique is a technique that demands a relatively high power supply for transmission, among other things because the amplifiers that are used in such systems have a low efficiency rating. Many types of equipment used for wireless communication in office environments, for example, portable computers and PDAs (Personal Digital Assistant) have power sources with extremely limited capacity, which means that it is difficult to use such equipment in multi-carrier systems. In spite of this, it is of course desirable to be able to use, for example, portable computers and PDAs for wireless communication also in systems where the multi-carrier technique is used.

### DESCRIPTION OF THE INVENTION

The problem that is solved by the present invention is thus to make it possible for equipment with a limited power supply to be incorporated in a multi-carrier system. The invention solves this problem by the technical features of independent claims 1 and 2.

### DESCRIPTION OF THE FIGURES

In the following, the invention will be described in greater detail, utilizing examples of preferred embodiments and with reference to the attached figures, in which:
Figure 1 shows the construction of different carrier-waves in a multi-carrier system, and
Figure 2 shows a MAC frame in a known multi-carrier system, and
Figure 3 shows communication over different carrier waves in a device according to the invention, and
Figure 4 shows a MAC frame in a system according to the invention, and
Figure 5 shows a MAC frame in an alternative system according to the invention.

### EMBODIMENTS

The invention can be used in a large number of different types of system that use different types of multi-carrier modulation. In the following, the invention will be illustrated using such a system, the so-called Hiperlan/2 system, which uses so-called OFDM modulation, Orthogonal Frequency Division Multiplex.

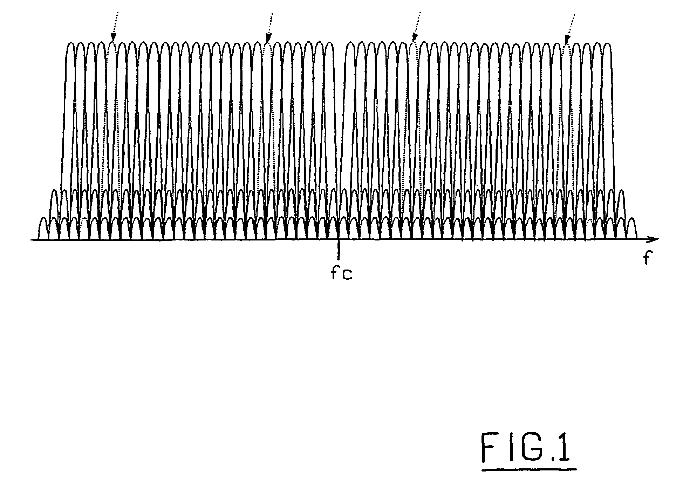

OFDM in Hiperlan/2 and IEEE 802.11 a uses 48 different carrier waves for the transmission of data, as shown in Figure 1. In addition to the 48 carrier waves for data transmission, the system uses four so-called pilot tones, which are shown in Figure 1 by broken lines and indicated with arrows. The pilot tones can, for example, be used for synchronization and measurement of signal strength. As also shown in Figure 1, the 48 carrier waves are evenly distributed over the frequency spectrum, except at the central frequency where there is no carrier wave.

Within the Hiperlan/2 system there are one or more central units, so-called Access Points (AP), each of which handles the communication with and between a number of subscribers, mobile terminals (MT), within a particular area. The area's APs tell each MT when it can receive data from the AP and when it can transmit data to the AP. All communication in the Hiperlan/2 system is structured in time using so-called MAC frames, Medium Access Control.

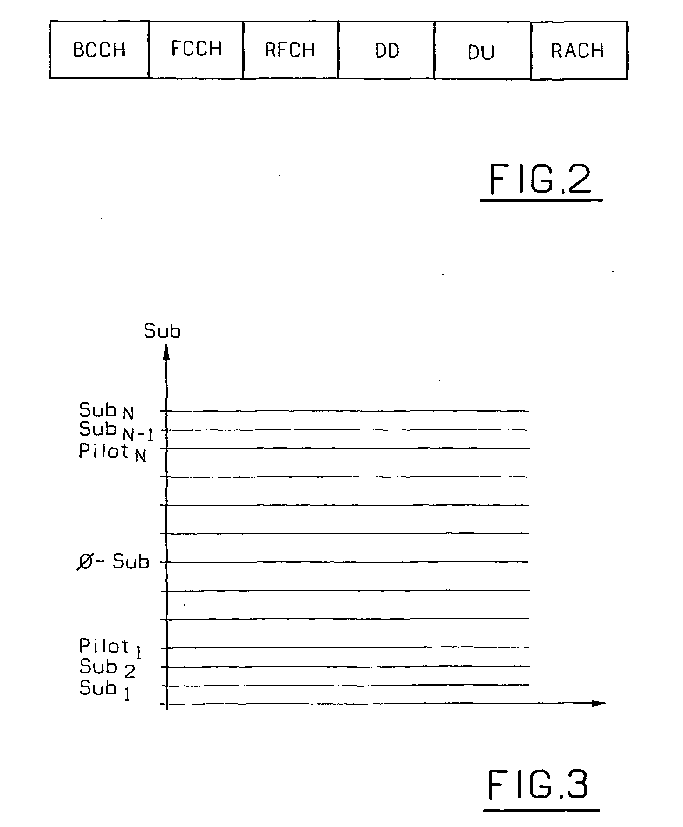

Figure 2 shows the basic construction of a MAC frame within the Hiperlan/2 system. When an MT wants to transmit data to AP, it is carried out in the following way:
1. MT sends a request to AP regarding being able to transmit data. This takes place in RACH, Random Access Channel.
2. AP sends out a signal that tells MT that its request regarding being able to transmit data has been received by AP. This is carried out in RFCH, Random Access Feedback Channel, in a later frame.
3. If the request is accepted by AP, AP tells MT when MT can transmit data to AP. This information concerning the allocated transmission slot is sent out in FCCH, Frame Control Channel, in another later frame.
4. MT transmits data to AP at the allocated time. This is carried out in DU, Data Uplink.

In addition to the parts described above, the MAC frame also comprises DD, Data Downlink, in other words data from AP to MT, and BCCH, Broadcast Control Channel.

Figure 3 shows schematically one of the principles behind the invention. The system comprises a number, 1-N, of carrier waves. A number of these (in the Hiperlan/2 system four in number) are so-called pilot-tones, which are intended, for example, for synchronization of frequencies.

In addition to the pilot tones, there is also a "gap", with no carrier wave, at the system's central frequency, the "zero frequency". As the central frequency in the system is not used, and the pilot tones are either unused or used to a minor extent, according to the invention these frequencies are used by one or more single-carrier units for transmission to the central unit in the system.

In order to achieve the function according to the invention, both the central unit and the single-carrier unit(s) should be provided with means for scheduling the transmissions from the single-carrier unit to the central unit in interaction with each other. This is carried out according to the invention by the central unit partly having full functionality to be able to communicate with the "ordinary" units in the multi-carrier system by means of the system's MAC frames, and also by it being provided with the ability to communicate with the single-carrier units using modified MAC frames, as will be described below.

Single-carrier units (MT) according to the invention have been given the ability to communicate with the central unit (AP) using the modified MAC frames, as will also be described below.

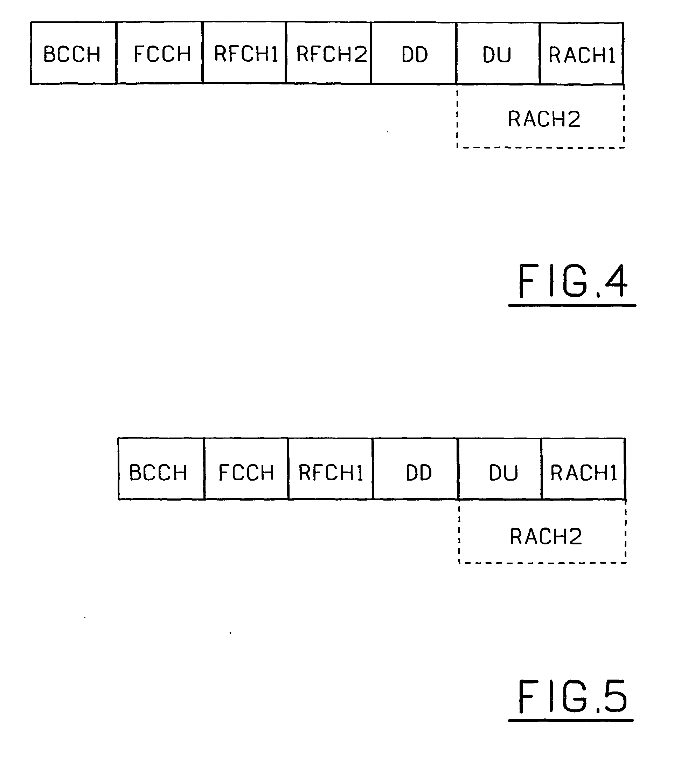

Figure 4 shows an example of a modified MAC frame according to the invention. The modification comprises the introduction of the ability also for single-carrier MTs to send a request regarding being able to transmit data, called RACH 2, where RACH 1 is the "ordinary" RACH that has been described above in connection with Figure 2. In addition the MAC frame has been modified so that AP can also tell single-carrier MTs that their request regarding being able to transmit data (RACH 2) has been received by AP, which is carried out in RFCH 2, where RFCH 1 is the "ordinary" RFCH that has been described above in connection with Figure 2.

The single-carrier units suitably send their request regarding transmission (RACH 2) on the central frequency, the "zero carrier wave", but transmit their data on one of the pilot tones. This means that the single-carrier units can transmit to and receive from the AP at the same time as the "ordinary" units, the multi-carrier units, in the system are communicating with the AP. In order for the single-carrier units to be able to transmit data to the AP on the pilot tones, the multi-carrier units should not try to use the same pilot tones at the same time. This can be arranged in two ways, either by changing the standard or by the AP in the system solving this by its scheduling of the transmission of the respective units.

The system is suitably arranged in such a way that not all the single-carrier units in the system send requests regarding transmission at the start of RACH 2. This can be achieved by a number of techniques that spread out the transmission requests in time, for example, so-called "slotted ALOHA", which techniques are familiar to experts in the field.

In order for the single-carrier units in the system to know when they can transmit their requests regarding transmission, they must know when RACH 2 commences in the relevant MAC frame. This information is suitably entered in each frame's FCCH, but can also be entered in the frame's BCCH.

Each unit in the system has its so-called "MAC-id", which the central unit in the system uses to be able to identify information to and from the different units. If the information concerning the start time for RACH 2 is entered in FCCH, the information can suitably be entered as a separate MAC-id. This MAC-id does not correspond to any physical entity, but is a MAC-id that the single-carrier units listen for in order to obtain information from the central unit, for example concerning the start and stop times for RACH 2.

Concerning the stop time for RACH 2, which coincides with the stop time for RACH 1, this can also be calculated by the single-carrier units, based on the start time of the current frame, as all the MAC frames have one and the same duration.

As shown in Figure 4, the start time for RACH 2 should coincide with the start time for DU, as this is the time when the central unit starts to listen out for data from the units in the system.

As mentioned above, there is a plurality of different frequencies on which the single-carrier units in a system according to the invention can transmit data to the central unit in the system. In, for example, FCCH the central unit should therefore send out information to every single-carrier unit regarding which frequency that particular unit is to transmit data on at the time it has been granted permission to transmit, so-called "Resource Grant". The information regarding which transmission frequency a particular unit has been allocated can be sent out in a number of ways in FCCH, for example, by using unused bits in FCCH in order to discuss this explicitly with the units, or by the unit's MAC-id being taken modulo N, where N is a predetermined number, for example the number of free frequencies that are available for transmission, in which case N will be equal to the number four in the Hiperlan/2 system.

Figure 5 shows an alternative MAC frame that can be used in a variant of the invention. As shown in Figure 5, this alternative MAC frame is identical to the one that has been described in connection with Figure 4, but with the difference that RFCH 2 is not included. In this variant of the invention, corresponding information is sent instead to the single-carrier units in FCCH, in other words information about the start time for RACH 2 and information about whether the request regarding transmission has been received by the AP. This information is sent using a special MAC-id that is known by the single-carrier units, which MAC-id is reserved for this information. All information about all narrow-band units' RA feedback is under one and the same MAC-id, as a so-called bitmap.

In order for the central unit in the system to be able to receive both multi-carrier signals and single-carrier signals at the same time, the central units according to the invention are modified in comparison to traditional central units in multi-carrier systems. A suitable way of carrying out this modification is that the central unit's existing receiver, that is to say the part(s) that handle(s) the conversion of the signal, is not changed, however a supplementary signal-processing function is introduced, the function of which is to separate the signals that arrive from the single-carrier units from the signals that arrive from the multi-carrier units. This supplementary signal-processing function can be implemented in a large number of ways familiar to experts in the field, and is not an essential part of the present invention, for which reason it is not described here in greater detail.

This invention is not limited to the embodiments described above but can be varied freely within the scope of the following patent claims.

## Claims

1. A central unit (AP) for a multi-carrier system, comprising equipment for the reception of a signal consisting of a plurality of carrier waves, additionally comprising equipment for the reception of a signal from equipment that transmits on one carrier wave, that is a single-carrier equipment (MT), whose one carrier wave is a carrier wave that is comprised in the multi-carrier system for which the central unit (AP) is designed, the central unit (AP) also being equipped with means for scheduling the transmission from the single-carrier equipment (MT) in interaction with the single-carrier equipment (MT), wherein the existing frame (MAC), which is used for scheduling the communication within the multi-carrier system in which the central unit (AP) is comprised, is modified to receive requests (RACH2) for data transmissions from the single carrier equipment (MT) in order to schedule the transmissions from the single-carrier equipment (MT) for said interaction with the single-carrier equipment (MT).

2. Single-carrier equipment (MT) arranged to transmit on one carrier wave, equipped with means for receiving transmissions in multi-carrier system technique, further being equipped with means for, in interaction with a central unit (AP) in a multi-carrier system, preferably a central unit (AP) according to claim 1, scheduling its own transmissions to the central unit (AP), wherein one of the existing frames (MAC), which frames (MAC) are used for scheduling the communication within the multi-carrier system in which the central unit (AP) is comprised, is modified to receive requests (RACH2) for data transmissions from the single carrier equipment (MT) in order to schedule the transmissions from the single-carrier equipment (MT) for said interaction with the central unit (AP).

3. Single-carrier equipment (MT) according to claim 2, which is equipped with means for sending requests for data transmission to the central unit (AP).

## Patentansprüche

1. Zentraleinheit (AP) für ein Mehrträgersystem mit einer Ausrüstung für den Empfang eines, aus einer Vielzahl von Trägerwellen bestehenden Signals, zusätzlich mit einer Ausrüstung für den Empfang eines Signals von einer Ausrüstung, die auf einer Trägerwelle überträgt, das heißt eine Einzelträger-Ausrüstung (MT), dessen eine Trägerwelle eine Trägerwelle ist, die in dem Mehrträgersystem enthalten ist, für das die Zentraleinheit (AP) ausgelegt ist, wobei die Zentraleinheit (AP) in Wechselwirkung mit der Einzelträger-Ausrüstung (MT) auch mit einer Einrichtung ausgestattet ist für ein Terminieren der Übertragung von der Einzelträger-Ausrüstung (MT), wobei der existierende Rahmen (MAC), der zum Terminieren der Kommunikation in dem Mehrträgersystem verwendet wird, in dem die Zentraleinheit (AP) enthalten ist, modifiziert wird, um Anforderungen (RACH2) nach Datenübertragungen von der Einzelträger-Ausrüstung (MT) zu empfangen, um für die Wechselwirkung mit der Zentraleinheit (AP) die Übertragungen von der Einzelträger-Ausrüstung (MT) für zu terminieren.

2. Einzelträger-Ausrüstung (MT), ausgelegt zum Übertragen auf einer Trägerwelle, ausgestattet mit einer Einrichtung zum Empfangen von Übertragungen in einem Mehrträgersystemverfahren, ferner ausgestattet mit einer Einrichtung zum, in Wechselwirkung mit einer Zentraleinheit (AP) in einem Mehrträgersystem, bevorzugt eine Zentraleinheit (AP) nach Anspruch 1, Terminieren dessen eigener Übertragungen an die Zentraleinheit (AP), wobei einer der existierenden Rahmen (MAC), dessen Rahmen (MAC) zur Terminierung der Kommunikation in dem Mehrträgersystem verwendet werden, in dem die Zentraleinheit (AP) enthalten ist, modifiziert wird, um Anforderungen (RACH2) nach Datenübertragungen von der Einzelträger-Ausrüstung zu empfangen, um für die Wechselwirkung mit der Zentraleinheit (AP) die Übertragungen von der Einzelträger-Ausrüstung zu terminieren.

3. Einzelträger-Ausrüstung (MT) nach Anspruch 2, die mit einer Einrichtung zum Senden von Anforderungen nach Datenübertragungen an die Zentraleinheit (AP) ausgerüstet ist.

## Revendications

1. Unité centrale (AP) pour un système à porteuses multiples, comprenant un équipement destiné à la réception d'un signal composé d'une pluralité d'ondes porteuses, comprenant en outre un équipement destiné à la réception d'un signal provenant d'un équipement qui émet sur une seule onde porteuse, c'est-à-dire un équipement à porteuse unique (MT), dont l'unique onde porteuse est une onde porteuse qui est comprise dans le système à porteuses multiples pour lequel l'unité centrale (AP) est conçue, l'unité centrale (AP) étant également équipée d'un moyen destiné à ordonnancer l'émission à partir de l'équipement à porteuse unique (MT) en interaction avec l'équipement à porteuse unique (MT), dans laquelle la trame existante (MAC) utilisée pour l'ordonnancement de la communication au sein du système à porteuses multiples dans lequel est incluse l'unité centrale (AP) est modifiée afin de recevoir des demandes (RACH2) d'émissions de données en provenance de l'équipement à porteuse unique (MT) afin d'ordonnancer les émissions à partir de l'équipement à porteuse unique (MT) pour ladite interaction avec l'équipement à porteuse unique (MT).

2. Équipement à porteuse unique (MT) conçu pour émettre sur une onde porteuse, équipé d'un moyen de réception d'émissions dans une technique d'un système à porteuses multiples, également équipé d'un moyen destiné, en interaction avec une unité centrale (AP) dans un système à porteuses multiples, de préférence une unité centrale (AP) selon la revendication 1, à ordonnancer ses propres émissions vers l'unité centrale (AP), dans lequel une des trames existantes (MAC), lesdites trames étant utilisées pour l'ordonnancement de la communication au sein du système à porteuses multiples dans lequel est incluse l'unité centrale (AP), est modifiée afin de recevoir des demandes (RACH2) d'émissions de données en provenance de l'équipement à porteuse unique (MT) afin d'ordonnancer les émissions à partir de l'équipement à porteuse unique (MT) pour ladite interaction avec l'unité centrale (AP).

3. Équipement à porteuse unique (MT) selon la revendication 2, équipé d'un moyen destiné à envoyer des demandes d'émission de données à l'unité centrale (AP).
